Europäisches Patentamt

European Patent Office

Office européen des brevets

(11) Numéro de publication: **0 191 700 B1**

# FASCICULE DE BREVET EUROPEEN

(45) Date de publication du fascicule du brevet:
**20.12.89**

(21) Numéro de dépôt: **86400310.8**

(22) Date de dépôt: **13.02.86**

(51) Int. Cl.⁴: **F 16 L 41/00,** F 16 L 41/08,
**B 29 C 67/18**

(54) **Raccord de dérivation sur tuyau souple.**

(30) Priorité: **14.02.85 FR 8502097**

(43) Date de publication de la demande:
**20.08.86 Bulletin 86/34**

(45) Mention de la délivrance du brevet:
**20.12.89 Bulletin 89/51**

(84) Etats contractants désignés:
**AT BE CH DE GB IT LI LU NL SE**

(56) Documents cités:
AU-A- 2 690 367
FR-A- 2 075 581
FR-A- 2 445 479
FR-A- 2 506 892
GB-A- 1 494 473
US-A- 3 104 136
US-A- 3 272 904

(73) Titulaire: **HUTCHINSON, 2 rue Balzac, F-75008 Paris (FR)**

(72) Inventeur: **Briet, Gilles, Le Petit Vallot Neuvy
Grandchamps, F-71130 Gueugnon (FR)**

(74) Mandataire: **Orès, Bernard et al, Cabinet
ORES 6, Avenue de Messine, F-75008 Paris (FR)**

ACTORUM AG

## Description

La présente invention est relative à un raccord de dérivation, et en particulier à un raccord de dérivation de purge, sur un tuyau souple principal armé ou non, gainé ou non.

La Demande de Brevet français FR-A 2 506 892 décrit un raccord de dérivation dont l'extrémité distale est de préférence séparée de la paroi du tuyau principal ou au plus en contact avec cette dernière, de façon à protéger l'armature du raccord et/ou du tuyau principal par pénétration d'un enrobage d'une matière de jonction, mise en forme par moulage, entre l'orifice de dérivation ménagé dans le tuyau principal et le raccord.

Ce raccord est constitué, en particulier lorsqu'il s'agit d'un raccord de dérivation de purge, par un insert tubulaire noyé au moins en partie dans ledit enrobage de matière de jonction.

Préalablement au moulage de cet enrobage, on applique (par pulvérisation ou par immersion ou autre), sur au moins les parties de l'insert destinées à être enrobées de ladite matière de jonction, de la matière de collage, notamment destinée à favoriser l'adhérisation de l'enrobage sur l'insert lors du moulage (il s'agit d'un moulage à chaud).

L'insert coopère avec une pièce destinée à boucher l'extrémité proximale de cet insert, laquelle pièce est pourvue de moyens permettant d'effectuer la purge sans enlever complètement la pièce de bouchage: à cet effet, la pièce en question est constituée par un bouchon tubulaire fileté, destiné à se visser à l'intérieur de l'insert préalablement taraudé, et sa paroi latérale est pourvue d'un orifice de purge ménagé à la partie supérieure.

Le Brevet américain US-A 3 104 136 décrit un insert tubulaire noyé dans un article obtenu par moulage (par injection) de matière plastique et comportant au moins un collier réalisé d'un seul tenant avec l'insert et faisant saillie de sa surface latérale.

Des projections, régulièrement espacées parallèlement à la paroi de l'insert, sont formées sur les bords des colliers par perçage et déformation de la matière dont se composent ceux-ci, et ce à l'aide d'un outil spécial.

Comme résultat direct de la formation des projections précitées, des encoches apparaissent sur le bord des colliers entre deux projections consécutives.

Lors de l'injection de la matière plastique, celle-ci enrobe complètement les colliers avec leurs projections et remplit les encoches.

Or, la matière d'enrobage coopère avec chacune de ces trois parties d'une manière spécifique pour éviter que l'insert se déplace sous l'action des forces qui peuvent solliciter l'insert. De façon plus précise:

a) la matière plastique entourant les colliers coopère avec ceux-ci pour s'opposer aux déplacements longitudinaux de l'insert (à savoir, parallèlement à son axe),

b) la matière plastique entourant les projections coopère avec celles-ci pour s'opposer aux mouvements de rotation relative entre l'insert et l'article dans lequel il est noyé,

c) la matière platique remplissant les encoches coopère avec celles-ci pour s'opposer aux efforts de torsion appliqués à l'insert.

Or, la solution apportée par le Brevet américain précité au problème technique, consistant à rechercher des moyens capables d'assurer le maintien en position de l'insert tubulaire par coopération avec la matière plastique qui l'enveloppe, est complexe et coûteuse, en raison notamment de la nécessité de faire recours à un outil de conception spéciale.

La présente invention a pour but de pourvoir à un raccord de dérivation de purge, qui répond mieux aux nécessités de la pratique que les raccords visant au même but antérieurement connus, notamment:

– en ce que le raccord de purge selon l'invention présente: une meilleure résistance en fatigue (et donc une meilleure tenue de l'étanchéité), une résistance en fatigue qui est plus constante dans le temps (vieillissement moindre), et

– en ce qu'on n'a pas besoin d'appliquer sur ce raccord (insert) de la matière de collage préalablement au moulage, ce qui simplifie le procédé de pose d'un raccord de purge.

La présente invention a pour objet un raccord de dérivation de purge, pour tuyau souple principal, armé ou non, gainé ou non, dans lequel est ménagé un orifice de dérivation, comprenant:

– un enrobage moulé d'une matière de jonction appropriée, notamment constituée par un élastomère ou une matière plastique, qui présente un conduit s'étendant de l'orifice de dérivation jusqu'à son extrémité séparée de la paroi du tuyau,

– un insert tubulaire taraudé qui est noyé dans l'enrobage et dont le conduit est aligné avec le conduit de l'enrobage,

– un bouchon adapté à fermer de façon étanche l'extrémité précitée de l'enrobage et comportant une tête de manœuvre et une tige filetée adaptée à se visser dans l'insert tubulaire,

– des moyens de purge intégrés dans le bouchon (5) permettant la purge lorsque ledit bouchon est desserré,

– des moyens d'ancrage de l'insert dans l'enrobage,

– lequel raccord de purge est caractérisé en ce que lesdits moyens d'ancrage de l'insert dans l'enrobage sont constitués par une pluralité de canaux traversants ménagée dans la paroi tubulaire de l'insert, ledit enrobage remplissant ces canaux et établissant des ponts de liaison entre les portions de l'enrobage qui enveloppent l'insert.

Outre les dispositions qui précèdent, l'invention comprend encore d'autres dispositions, qui ressortiront de la description qui va suivre.

L'invention sera mieux comprise à l'aide du complément de description qui va suivre, qui se réfère aux dessins annexés dans lesquels:

la fig. 1 est une vue en coupe verticale montrant le raccord de purge conforme à l'invention;

les fig. 2 et 4 sont des vues en plan de l'insert tubulaire selon l'invention illustré à la fig. 1, qui montrent deux dispositions particulières des trous de pénétration de la matière de jonction utilisée dans le cadre de l'invention, et

les fig. 3 et 5 sont des vues en coupe (demi-sections) suivant les lignes III–III et V–V des fig. 2 et 4, respectivement, montrant un détail avantageux relatif à ces trous de pénétration.

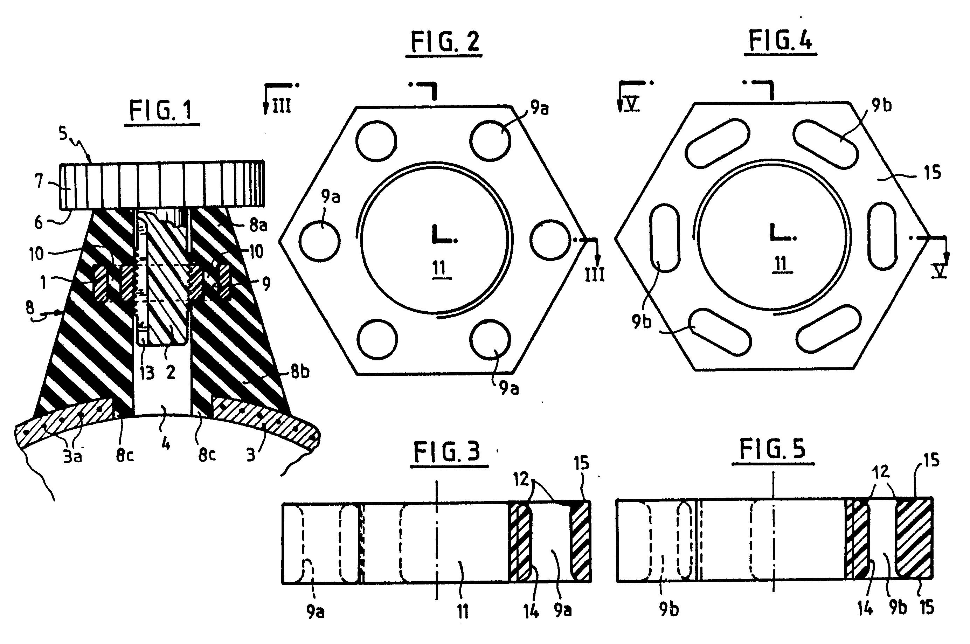

Dans la fig. 1, la référence 3 dénote un tuyau principal souple, notamment armé (cf. réf. 3a), dans lequel a été ménagé un orifice de dérivation 4, en correspondance duquel on veut établir un raccord de dérivation de purge.

Celui-ci est constitué par un insert taraudé qui se présente en particulier sous la forme d'un écrou 1 dans lequel vient se visser la tige centrale filetée 2 d'un bouchon 5 destiné à fermer de façon étanche l'extrémité proximale de l'écrou 1 en prenant appui, par l'intermédiaire de la face inférieure 6 de sa tête de manœuvre 7, sur la portion supérieure 8a de la matière d'enrobage 8 dans laquelle est noyé cet écrou 1.

L'enrobage 8 enveloppe complètement l'écrou 1 et sa portion inférieure 8b pénètre dans l'orifice de dérivation 4 pour protéger l'armature à l'aide d'un collerette 8c et s'applique sur la paroi du tuyau principal 3 définissant une sorte de cône d'enrobage 8 surmonté par ledit bouchon 5.

Conformément à l'invention, dans l'épaisseur de l'écrou 1 sont ménagés des trous 9 (voir aussi les références 9a ou 9b dans les fig. 2 à 5): de cette manière l'enrobage 8 de matière de jonction, qui pénètre dans ces trous lors du moulage, établit des ponts de liaison 10 (cf. la fig. 1) entre lesdites portions inférieure et supérieure 8a et 8b de l'enrobage 8 qui se trouvent au-dessous et au-dessus de l'écrou 1, les ponts 10 assurant le maintien en position de ce dernier.

De préférence, les trous sont distribués uniformément tout autour du conduit 11 de dérivation délimité par l'écrou 1 et symétriquement par rapport à l'axe de ce conduit.

La section des trous de passage ou de pénétration de la matière de jonction peut être de forme a priori quelconque, mais de préférence circulaire ou ovoïdale (cf. les fig. 4 et 2, respectivement).

De toutes façons, dans chaque cas il est avantageux que la paroi interne 14 de ces trous se raccorde par des évasements ou arrondissements (12) en passant de l'intérieur vers la paroi extérieure 15 de l'insert (cf. les fig. 3 et 5), ce qui améliore l'adhérence entre l'insert et la matière de jonction 8.

Bien que les figures représentent un insert sous forme d'écrou, il va de soi que toutes autres configurations sont en principe envisageables.

De même, le nombre des trous (six dans les fig. 2 et 4) et la section (hexagonale) de l'écrou ne sont pas limitatifs non plus, ainsi que l'utilisation de trous traversants ménagés perpendiculairement à l'épaisseur de l'écrou.

En fait, on peut facilement imaginer de ménager des trous dont l'axe est incliné pour tous les trous latéralement vers le haut ou vers le bas, par rapport à l'axe de l'écrou, ou encore incliné alternativement latéralement vers le haut et vers le bas en passant d'un trou au trou contigu.

On peut, en outre, imaginer de ménager des canaux parcourant l'écrou dans un plan et/ou dans deux ou plusieurs plans parallèles aux bases de l'écrou ou ayant un parcours quelconque, ces canaux pouvant remplacer lesdits trous ou pouvant coopérer avec ces trous.

De plus, la matière de jonction peut être aussi constituée par une matière plastique dont le moulage autour de l'insert se fait par injection.

En outre, bien que la fig. 1 représente un enrobage s'arrêtant sur la paroi du tuyau principal, il va de soi que dans certains cas l'enrobage peut, de façon connue, envelopper complètement ce tuyau principal (cf. en particulier la fig. 1 de la Demande de Brevet français FR-A 2 549 196), et ce notamment lorsque son diamètre est de l'ordre de grandeur du diamètre de l'insert: pour des évidentes raisons d'économie de matériau il n'est pas avantageux d'utiliser cette disposition dans tous les cas.

Il y a encore lieu de souligner que l'insert et le bouchon peuvent être non seulement réalisés en une matière métallique, notamment en laiton, mais de préférence en une matière plastique appropriée.

On remarquera encore la présence d'une rainure longitudinale 13 (cf. la fig. 1) ménagée sur la surface de la tige filetée 2 du bouchon 5 qui correspond à un moyen alternatif à celui proposé dans la Demande de Brevet français FR-A 2 506 892 pour effectuer la purge sans devoir nécessairement dévisser complètement le bouchon 5.

Ce qui importe dans le cadre de la présente invention est que l'insert tubulaire – qui est noyé dans l'enrobage de matière de jonction et qui est destiné à être fermé par un bouchon approprié permettant d'effectuer la purge toutes les fois que cela est nécessaire – présente dans l'épaisseur de sa paroi une pluralité de trous ou de canaux dans lesquels ladite matière de jonction puisse pénétrer lors du moulage pour emprisonner l'insert.

De cette manière on peut avantageusement se passer d'appliquer, préalablement au moulage de la matière de jonction, une matière de collage sur l'insert, ce qui simplifie la réalisation d'un raccord de purge tout en le rendant plus résistant: la résistance en fatigue peut même doubler, ainsi que l'ont montré des tests de fatigue consistant à soumettre les raccords de purges réalisés selon l'invention à des variations de pression cycliques d'intensité et durée prédéterminées.

En outre, les performances des différents raccords de purge ainsi obtenus sont plus uniformes, ce qui rend les raccords conformes à la présente invention plus fiables.

## Revendications

1. Raccord de dérivation de purge, pour tuyau souple principal (3), armé ou non, gainé ou non, dans lequel est ménagé un orifice de dérivation (4), comprenant:
- un enrobage moulé (8) d'une matière de jonction appropriée, notamment constituée par un élastomère ou une matière plastique, qui présente un conduit s'étendant de l'orifice de dérivation (4) jusqu'à son extrémité séparée de la paroi du tuyau (3),
- un insert tubulaire (1) taraudé qui est noyé dans l'enrobage et dont le conduit est aligné avec le conduit de l'enrobage,
- un bouchon (5) adapté à fermer de façon étanche l'extrémité précitée de l'enrobage et comportant une tête de manœuvre (7) et une tige filetée (2) adaptée à se visser dans l'insert tubulaire (1),
- des moyens de purge intégrés dans le bouchon (5), permettant la purge lorsque ledit bouchon est desserré,
- des moyens d'ancrage de l'insert (1) dans l'enrobage (8),
- lequel raccord de purge est caractérisé en ce que lesdits moyens d'ancrage de l'insert dans l'enrobage (8) sont constitués par une pluralité de canaux traversants (9; 9a, 9b) ménagés dans la paroi tubulaire de l'insert (1), ledit enrobage (8) remplissant ces canaux et établissant des ponts (10) de liaison entre les portions (8a, 8b) de l'enrobage (8) qui enveloppent l'insert (1).

2. Raccord de purge selon la revendication 1, caractérisé en ce que les canaux (9a ou 9b) sont ménagés dans la paroi de l'insert tubulaire (1), parallèlement à l'axe de cet insert.

3. Raccord de purge selon la revendication 1, caractérisé en ce que les canaux sont ménagés dans un même plan ou dans des plans différents, ce plan ou ces plans étant perpendiculaires à l'axe de l'insert tubulaire.

4. Raccord de purge selon la revendication 1, caractérisé en ce que les canaux présentent leurs axes inclinés par rapport à l'axe de l'insert tubulaire.

5. Raccord de purge selon la revendication 4, caractérisé en ce que les canaux présentent leurs axes inclinés d'un même angle et dans le même sens en passant d'un canal au canal contigu.

6. Raccord de purge selon la revendication 4, caractérisé en ce que les canaux présentent leurs axes inclinés d'un même angle mais alternativement dans un sens et dans le sens opposé en passant d'un canal au canal contigu.

7. Raccord de purge selon la revendication 1, caractérisé en ce que les canaux présentent leurs axes curvilignes, notamment en forme d'arc de cercle, ou comportent des segments curvilignes et rectilignes se succédant de façon a priori quelconque.

8. Raccord de purge selon l'une quelconque des revendications 1 à 7, caractérisé en ce que le raccordement entre la paroi interne (14) des canaux (9a ou 9b) et la paroi externe (15) de l'insert (1) est constitué par des portions arrondies ou évasées (12).

9. Raccord de purge selon l'une quelconque des revendications 1 à 6 et 8, caractérisé en ce que les canaux sont distribués uniformément autour de l'axe de l'insert.

10. Raccord de purge selon l'une quelconque des revendications 1 à 9, caractérisé en ce que les moyens de purge ne nécessitent pas le dévissage complet du bouchon (5) et comprennent une rainure de purge (13) ménagée sur la surface externe de la tige filetée (7) du bouchon (5).

## Patentansprüche

1. Entleerungsabzweigungsanschluss für einen verstärkten oder nichtverstärkten, ummantelten oder nichtummantelten flexiblen Hauptschlauch (3), in dem eine Abzweigungsöffnung (4) vorgesehen ist, umfassend:
- eine geformte Umhüllung (8) aus einem geeigneten Verbindungsmaterial, das insbesondere von einem Elastomer oder einem Kunststoffmaterial gebildet ist, welche einen Kanal aufweist, der sich von der Abzweigungsöffnung (4) bis zu seinem von der Wand des Schlauchs (3) getrennten Ende erstreckt,
- einen mit Innengewinde versehenen rohrförmigen Einsatz (1), der in der Umhüllung versenkt ist und dessen Kanal mit dem Kanal der Umhüllung fluchtet,
- einen Verschluss (5), der dazu geeignet ist, das vorgenannte Ende der Umhüllung in dichter Weise zu verschliessen und einen Betätigungskopf (7) und einen mit Aussengewinde versehenen Schaft (2), der dazu geeignet ist, in den rohrförmigen Einsatz (1) eingeschraubt zu werden, umfasst,
- in den Verschluss (5) integrierte Entleerungsmittel, welche die Entleerung gestatten, wenn der Verschluss gelockert wird,
- Mittel zur Verankerung des Einsatzes (1) in der Umhüllung (8),
- wobei dieser Entleerungsanschluss dadurch gekennzeichnet ist, dass die erwähnten Mittel zur Verankerung des Einsatzes in der Umhüllung (8) von einer Mehrzahl von Durchgangskanälen (9; 9a, 9b) gebildet sind, die in der rohrförmigen Wand des Einsatzes (1) vorgesehen sind, wobei die Umhüllung (8) diese Kanäle ausfüllt und Verbindungsbrücken (10) zwischen den Teilen (8a, 8b) der Umhüllung (8) bildet, welche den Einsatz (1) umhüllen.

2. Entleerungsanschluss nach Anspruch 1, dadurch gekennzeichnet, dass die Kanäle (9a oder 9b) in der Wand des rohrförmigen Einsatzes (1) parallel zur Achse dieses Einsatzes vorgesehen sind.

3. Entleerungsanschluss nach Anspruch 1, dadurch gekennzeichnet, dass die Kanäle in einer gleichen Ebene oder in unterschiedlichen Ebenen angeordnet sind, wobei diese Ebene oder diese Ebenen senkrecht zur Achse des rohrförmigen Einsatzes sind.

4. Entleerungsanschluss nach Anspruch 1, dadurch gekennzeichnet, dass die Achsen der Kanäle bezüglich der Achse des rohrförmigen Einsatzes geneigt sind.

5. Entleerungsanschluss nach Anspruch 4, dadurch gekennzeichnet, dass die Achsen der Kanäle um den gleichen Winkel und in der gleichen Richtung geneigt sind, wenn von einem Kanal zum benachbarten Kanal gegangen wird.

6. Entleerungsanschluss nach Anspruch 4, dadurch gekennzeichnet, dass die Achsen der Kanäle um den gleichen Winkel, jedoch abwechselnd in einer Richtung und in der entgegengesetzten Richtung geneigt sind, wenn von einem Kanal zum benachbarten Kanal gegangen wird.

7. Entleerungsanschluss nach Anspruch 1, dadurch gekennzeichnet, dass die Achsen der Kanäle gekrümmt sind, insbesondere in Form eines Kreisbogens, oder gekrümmte und geradlinige Abschnitte umfassen, die in irgendeiner vorbestimmten Weise aufeinanderfolgen.

8. Entleerungsanschluss nach irgendeinem der Ansprüche 1 bis 7, dadurch gekennzeichnet, dass der Übergang zwischen der inneren Wand (14) der Kanäle (9a oder 9b) und der äusseren Wand (15) des Einsatzes (1) von gerundeten oder ausgeweiteten Teilen (12) gebildet ist.

9. Entleerungsanschluss nach irgendeinem der Ansprüche 1 bis 6 und 8, dadurch gekennzeichnet, dass die Kanäle gleichförmig um die Achse des Einsatzes verteilt sind.

10. Entleerungsanschluss nach irgendeinem der Ansprüche 1 bis 9, dadurch gekennzeichnet, dass die erwähnten Entleerungsmittel nicht das vollständige Abschrauben des Verschlusses (5) notwendig machen und eine Entleerungsnut (13) umfassen, die auf der äusseren Oberfläche des mit Innengewinde versehenen Schafts (2) des Verschlusses (5) vorgesehen ist.

**Claims**

1. Purge branch coupling, for a main flexible hose (3), reinforced or not, lined or not, in which a branch orifice (4) is formed, comprising:
- a molded covering (8) of a suitable joint material, particularly constituted by an elastomer or a plastics material, which has a pipe extending from the branch orifice (4) up to its end separated from the wall of the hose (3),
- a tapped tubular insert (1) which is buried in the covering and of which the duct is aligned with the duct of the covering,
- a plug (5) adapted to close the aforesaid end of the covering in a fluid-tight manner and comprising a manipulating head (7) and a threaded shank (2) adapted to be screwed into the tubular insert (1)

- purging means integrated into the plug (5) enabling purging when said plug is unscrewed,
- anchoring means for the insert (1) in the covering (8)
- which purge coupling is characterized in that said anchoring means for the insert in the covering (8) are constituted by a plurality of traversing the channels (9; 9a, 9b) formed in the tubular wall of the insert (1), said covering (8) filling these channels and establishing linking bridges (10) between the portions (8a, 8b) of the covering (8) which envelope the insert (1).

2. Purge coupling according to claim 1, characterized in that the channels (9a or 9b) are formed in the wall of the tubular insert (1), parallel with the axis of this insert.

3. Purge coupling according to claim 1, characterized in that the channels are formed in a same plane or in different planes, this or these planes being perpendicular to the axis of the tubular insert.

4. Purge coupling according to claim 1, characterized in that the channels have their axes inclined with respect to the axis of the tubular insert.

5. Purge coupling according to claim 4, characterized in that the channels have their axis inclined at the same angle and in the same direction in passing from one channel to the contiguous channel.

6. Purge coupling according to claim 4, characterized in that the channels have their axes inclined at the same angle but alternatively in one direction and in the opposite direction, in passing from one channel to the contiguous channel.

7. Purge coupling according to claim 1, characterized in that the channels have their axes in curvilinear form, particularly in the form of a circular arc, or comprise curvilinear and rectilinear segments succeeding each other a priori in any manner.

8. Purge coupling according to any one of claims 1 to 7, characterized in that the connection between the inner wall (14) of the channels (9a or 9b) and the outer wall (15) of the insert (1) is constituted by rounded or flared portions (12).

9. Purge coupling according to any one of claims 1 to 6 and 8, characterized in that the channels are distributed uniformly around the axis of the insert.

10. Purge coupling according to any one of claims 1 to 9, characterized in that the purge means do not require the complete unscrewing of plug (5) and comprise a purge groove (13) formed on the outer surface of the threaded shaft (7) of the plug (5).

EP 0 191 700 B1

FIG.1

FIG. 2

FIG.4

FIG.3

FIG.5